# EUROPEAN PATENT SPECIFICATION

(11) **EP 0 639 165 B1**
(45) Date of publication and mention of the grant of the patent: **12.03.1997**
(21) Application number: 92916352.5
(22) Date of filing: 07.05.1992
(51) Int. Cl.: C04B 35/84, C04B 35/00

(54) **A CERAMIC COMPOSITE, PARTICULARLY FOR USE AT TEMPERATURES ABOVE 1400 oC**
KERAMISCHES VERBUNDMATERIAL, INSBESONDERE ZUR VERWENDUNG BEI TEMPERATUREN ÜBER 1400 o C
MATERIAU COMPOSITE CERAMIQUE NOTAMMENT DESTINE A ETRE UTILISE AU-DESSUS DE 1400 oC

(43) Date of publication of application: 22.02.1995
(73) Proprietor: Volvo Aero Aktiebolag, 46181 Trollhättan (SE); ROLLS-ROYCE plc, Filton, Bristol BS12 7QE (GB)
(72) Inventor: PEJRYD, Lars, S-461 44 Trollhättan (SE); LUNDBERG, Robert, S-461 30 Trollhättan (SE); BUTLER, Edwin, Warwick CV35 7HL (GB)
(74) Representative: Delmar, John-Ake
(86) International application number: PCT/SE92/00297
(87) International publication number: WO 93/22258

(56) References cited:
- EP-A- 0 202 504
- US-A- 4 298 385
- US-A- 5 017 528
- US-A- 5 110 771

## Description

The present invention refers to a ceramic composite material comprising matrix, reinforcing materials and an intermediate weak interface material and particularly adapted for use at temperatures above 1400°C and in oxidizing environment, said matrix and possibly reinforcing materials consisting of the same or different ceramic oxides having a melting point above 1600°C.

Ceramic composite materials might be divided into materials reinforced by particles, whiskers or elongated fibres. Said materials are prepared by powder processes and sintering or by gas-phase infiltration. The materials hitherto mentioned in the literature often are based on the provision of desired composite characteristics by means of a weak interface material between the matrix and the reinforcing material, preferably fibres, said interface material consisting of carbon or boron nitride, see e.g. Frety, N., Boussuge, M., "Relationship between high-temperature development of fibre-matrix interfaces and the mechanical behaviour of SiC-SiC composites", Composites Sci. Techn. 37 177-189 (1990) and Singh, R.N., "Influence of high temperature exposure on mechanical properties of zircon-silicon carbide composites", J. Mater. Sci. 26 117-126 (1991), respectively. Both carbon and boron nitride have a layered structure which makes them weak in one direction and this can be utilized for deflecting cracks along the interface between fibre and matrix. Both carbon and boron nitride, however, are very sensitive to oxidation which starts already at relatively low temperatures of about 500-800°C. In order to enable the use of ceramic composites at high temperatures in oxidizing atmosphere, such as in combustion chambers of gas turbines, rocket nozzles etc. other oxidation-resistent weak interface materials are required. An attempt to provide such materials has been mentioned in Carpenter, H.W., Bohlen, J.W., "Fiber coatings for ceramic matrix composites", Ceram. Eng. Sci. Proc. vol 13 9-10 (1992). In said attempt composites have been manufactured with SiC fibres and a layered SiC interface in an SiC matrix. Experiments also have been made with interfaces of a porous oxide in a SiC/SiC composite. However, SiC is stable in an oxidizing environment only up to 1000°C, at higher temperatures a SiO₂ layer always is formed on the surface in oxidizing atmosphere. Often SiO₂ is not stable together with other oxides but reacts therewith and forms strong bonds to adjacent materials. Therefore, SiO₂ does not constitute a useful interface material in the present connection. Thus there is still a need for improved composite materials which might be used in oxidizing environments at temperatures above 1400°C. Other solutions to the problems meeting in this field have been suggested in EP-A2-0 205 504, US-A-5 110 771 and US-A-5 017 528, without being fully successful, however. None of them can provide a weak bond liable to debonding between the interface material, matrix material and fibres, when the interface material is coating the fibres.

The object of the present invention now is to suggest such a ceramic composite material and the feature essentially distinguishing the invention is that for obtaining a weak bond liable to debonding between the interface material and the matrix material and/or the reinforcing fibres, respectively, the interface material has been applied as a coating on the fibres and consisted of one or more ceramic oxides not exhibiting solid solubility, eutecticum below the temperature of manufacture or use or reactivity with any of the matrix or reinforcing materials, said matrix and reinforcing aterials being substantially pure.

One of the most obvious interface materials is ZrO₂ which fills the requirements as to oxidation resistance and good high temperature characteristics. In US A 4 732 877 recently has been suggested an interface of ZrO₂ in a composite of Al₂O₃/Al₂O₃. According to said patent, however, the only object of ZrO₂ is to act as a diffusion barrier and prevent a reaction between reinforcing fibres and matrix. The interface obtained is strong by its binding to said materials and not weak as is necessary in ceramic composites for the present use.

Thus the present invention refers to an interface material for a ceramic composite material in which the matrix and the reinforcing material consist of a ceramic oxide comprising one or more metals and having a melting point above 1600°C, said oxide not exhibiting solid solubility, eutecticum below the temperature of manufacture or use or reactivity with any of the other oxides in the interface or the matrix or reinforcing materials. As examples of such oxides there can be mentioned Al₂O₃, ZrO₂, HfO₂, Al₂TiO₅, SnO₂, Y₂O₃, BeAl₂O₄, yttrium aluminium garnet (YAG), LaCrO₃, mullite, BeO and Cr₂O₃.

The invention further is distinguished in that a beneficial stress field for enhancing the debonding has been formed either by differences in thermal expansion coefficient between the interface material and the matrix and reinforcing fibres or between various inherent phases in the very interface material; or by the latter as such having anisotropic structure with different thermal expansion coefficient in different crystal directions; or by providing a phase conversion between the phases of the interface material and hence a volyme change or by the interface material being a composite having at least two phases which have different elastic characteristics or different thermal expansion coefficients. As examples of some well-serving interface materials it might be mentioned Al₂TiO₅, cordierite, unstabilized ZrO₂, SnO₂, HfO₂, mullite, YAG, YAG+ZrO₂, Al₂O₃+ZrO₂ and AO₂TiO₅+Al₂O₃. Of said substances, Al₂TiO₅ and cordierite act as interface materials due to their anisotropy, while ZrO₂ and SnO₂ act by micro-cracks. YAG, HfO₂, ZrO₂, Al₂TiO₅, cordierite, mullite and SnO₂ act as interface materials due to differences in thermal expansion while ZrO₂ and possibly HfO₂ might be subjected to phase conversion. Preferably, the interface material has a thickness of at least 2 µm. When the interface material is ZrO₂, it is used in the form of powder or sol during coating of a fibre reinforcing material in order to avoid chemical binding of ZrO₂ to the fibres.

Based on the above mentioned the following examples of well-serving composite systems of reinforcing material/interface/matrix might be mentioned.

| | |
|---|---|
| Al₂O₃/Al₂TiO₅/Al₂O₃ | YAG/Al₂TiO₅/Al₂O₃ |
| Al₂O₃/ZrO₂/Al₂O₃ | YAG/ZrO₂/Al₂O₃ |
| Al₂O₃/HfO₂/Al₂O₃ | YAG/HfO₂/Al₂O₃ |
| Al₂O₃/YAG/Al₂O₃ | Al₂O₃/SnO₂/Al₂O₃ |
| YAG/SnO₂/Al₂O₃ | Al₂O₃/mullite/Al₂O₃ |
| mullite/ZrO₂/mullite | |

### Example 1

Fibres of Al₂O₃ (ALMAX, Mitsui, Japan) were covered with a thin layer of Al₂TiO₅. This was made by immersing the fibres into a Al-Ti-alkoxide. After gelling and drying the coated fibres were stacked in a plaster mould and a Al₂O₃ powder slurry was poured thereon.

After drying the slip-cast bodies were sintered by hot-pressing at 1500°C for 4 hours. After sintering the Al₂TiO₅ layer was about 3 µm thick. The Al₂TiO₅ layer comprised micro-cracks deflecting cracks which was proved by diamond indentation or bending tests.

### Example 2

Single-crystal-fibres of Al₂O₃ (from Saphicon, USA) were coated with a thin layer of ZrO₂. This was made by immersing the fibres in an aqueous ZrO₂-sol. After gelling and drying the coated fibres were stacked in a plaster mould and an Al₂O₃- powder slurry was poured thereon. After drying the slip-cast bodies were sintered by hot-pressing at 1500°C for 4 hours. After sintering the ZrO₂ layer was about 3 µm thick. Stress-induced micro-cracks occurred between the layer and the Al₂O₃-material. These deflected cracks which was proved by diamond indentation or bending tests.

## Claims

1. A ceramic composite material comprising matrix material and reinforcing fibres and an intermediate interface ceramic oxide material and intended for use at temperatures above 1400°C and in oxidizing environment, the matrix and reinforcing fibres consisting of the same or different ceramic oxides having a melting point above 1600°C, **characterized in** that for obtaining a weak bond liable to debonding between the interface material and the matrix material and/or the reinforcing fibres, respectively, the interface material has been applied as a coating on the fibres and that said interface material consists of one or more ceramic oxides not exhibiting solid solubility or eutecticum below the temperature of manufacture or reactivity with any of the matrix or reinforcing materials, said matrix and reinforcing materials being substantially pure.

2. A composite material according to claim 1, **characterized in** that a beneficial stress field for enhancing the debonding has been formed either by differences in thermal expansion coefficient between the interface material and the matrix and reinforcing fibres or between various inherent phases in the very interface material; or by the latter as such having anisotropic structure with different thermal expansion coefficient in different crystal directions; or by providing a phase conversion between the phases of the interface material and hence a volume change or by the interface material being a composite having at least two phases which have different elastic characteristics or different thermal expansion coefficients.

3. A composite material according to claim 1 or 2, **characterized in** that the combination fibre/interface material/matrix material is selected from the group consisting of
| | |
|---|---|
| Al₂O₃/Al₂TiO₅/Al₂O₃ | YAG/Al₂TiO₅/Al₂O₃ |
| Al₂O₃/ZrO₂/Al₂O₃ | YAG/ZrO₂/Al₂O₃ |
| Al₂O₃/HfO₂/Al₂O₃ | YAG/HfO₂/Al₂O₃ |
| Al₂O₃/YAG/Al₂O₃ | Al₂O₃/SnO₂/Al₂O₃ |
| YAG/SnO₂/Al₂O₃ | Al₂O₃/mullite/Al₂O₃ |
| mullite/ZrO₂/mullite | |

4. A composite material according to claim 1-3 , **characterized in** that, in order to avoid chemical bonding of the interface material to the reinforcing fibres and/or the matrix material during fibre coating, an interface material in the form of powder or sol has been used.

5. A composite material according to any of the claims 1 to 4, **characterized in** that the interface material has a thickness of at least 2 µm.

## Patentansprüche

1. Keramisches Verbundmaterial, bestehend aus Matrixmaterial und verstärkenden Fasern sowie einem als Grenzfläche zwischengefügten Keramikoxidmaterial, zur Verwendung bei Temperaturen über 1400°C und in oxidierender Umgebung, wobei das Matrixmaterial und die verstärkenden Fasern aus denselben oder verschiedenen Keramikoxiden mit einem Schmelzpunkt über 1600°C bestehen,
dadurch gekennzeichnet,
daß zum Erhalt einer schwachen Verbindung, die sich leicht zwischen dem Grenzflächenmaterial und dem Matrixmaterial und/oder den verstärkenden Fasern löst, wobei das Grenzflächenmaterial als Überzug auf die Fasern aufgebracht wird, und daß das Grenzflächenmaterial aus einem oder mehreren Keramikoxiden besteht, die unter der Herstellungstemperatur keine Löslichkeit in festem Zustand oder ein Eutektikum oder eine Reaktionsfähigkeit mit irgendeinem Matrix- oder dem Verstärkungsmaterial zeigen, wobei die Matrix und das Verstärkungsmaterial größtenteils rein sind.

2. Verbundmaterial nach Anspruch 1,
dadurch gekennzeichnet, daß
ein günstiges Belastungsfeld zur Verbesserung des Lösens der Bindung entweder durch Unterschiede der Wärmeausdehnungskoeffizienten zwischen dem Grenzflächenmaterial und der Matrix und den verstärkenden Fasern, oder zwischen verschiedenen inhärenten Phasen im Grenzflächenmaterial selbst entsteht; oder dadurch, daß letzteres als solches eine anisotrope Struktur mit verschiedenen Wärmeausdehnungskoeffizienten in verschiedenen Kristallrichtungen hat; oder durch Bereitstellung einer Phasenumwandlung zwischen den Phasen des Grenzflächenmaterials und somit einer Volumenänderung, oder dadurch, daß das Grenzflächenmaterial ein Verbundmaterial mit mindestens zwei Phasen ist, welche unterschiedliche Elastizitätsmerkmale oder unterschiedliche Wärmeausdehnungskoeffizienten haben.

3. Verbundmaterial nach Anspruch 1 oder 2,
dadurch gekennzeichnet,
daß die Kombination aus Faser/Grenzflächenmaterial/Matrixmaterial aus der Gruppe ausgewählt ist, die sich wie folgt zusammensetzt:
| | |
|---|---|
| Al₂O₃/Al₂TiO₅/Al₂O₃ | YAG/Al₂TiO₅/Al₂O₃ |
| Al₂O₃/ZrO₂/Al₂O₃ | YAG/ZrO₂/Al₂O₃ |
| Al₂O₃/HfO₂/Al₂O₃ | YAG/HfO₂/Al₂O₃ |
| Al₂O₃/YAG/Al₂O₃ | Al₂O₃/SnO₂/Al₂O₃ |
| YAG/SnO₂/Al₂O₃ | Al₂O₃/Mullit/Al₂O₃ |
| Mullit/ZrO₂/Mullit. | |

4. Verbundmaterial nach Anspruch 1-3,
dadurch gekennzeichnet, daß zur Verhinderung einer chemischen Bindung des Grenzflächenmaterials an die verstärkenden Fasern und/oder das Matrixmaterial während des Faserüberzugs ein Grenzflächenmaterial in Form eines Pulvers oder eines Sols verwendet wird.

5. Verbundmaterial nach einem der Ansprüche 1 bis 4,
dadurch gekennzeichnet, daß das Grenzflächenmaterial eine Dicke von mindestens 2 µm hat.

## Revendications

1. Matériau composite céramique, comportant une matière de matrice et des fibres de renforcement et une matière intermédiaire d'interface en oxyde céramique, et destiné à être utilisé à des températures au-dessus de 1400 C° et dans un environnement oxydant, la matrice et les fibres de renforcement consistant en des oxydes céramiques identiques ou différents présentant un point de fusion au-dessus de 1600 C°, **caractérisé** en ce que, pour obtenir une liaison faible susceptible de se défaire, entre la matière d'interface et la matière de matrice et/ou les fibres de renforcement, respectivement, la matière d'interface a été appliquée comme revêtement sur les fibres, et en ce que ladite matière d'interface consiste en un ou plus d'un oxyde céramique ne présentant pas de solubilité à l'état solide, un point eutectique au-dessous de la température de fabrication, ou une réactivité avec aucune des matières de matrice ou de renforcement, lesdites matières de matrice ou de renforcement étant sensiblement pures.

2. Un matériau composite selon la revendication 1, **caractérisé** en ce qu'un champ de contraintes avantageux pour renforcer la libération de la liaison a été formé soit par des différences de coefficient de dilatation thermique entre la matière d'interface et la matrice et les fibres de renforcement, ou entre les diverses phases inhérentes dans la matière d'interface elle-même ; soit par le fait que cette dernière elle-même présente une structure anisotropique avec un coefficient de dilatation thermique différent dans différentes directions cristallines ; soit en prévoyant une conversion de phase entre les phases de la matière d'interface et , par conséquent, une variation de volume, soit par le fait que la matière d'interface est un composite présentant au moins deux phases qui ont des caractéristiques élastiques différentes ou des coefficients de dilatation thermique différents.

3. Un matériau composite selon la revendication 1 ou 2, **caractérisé** en ce que la combinaison fibre/matière d'interface/matière de matrice est sélectionnée dans le groupe constitué par
| | |
|---|---|
| Al₂O₃/Al₂TiO₅/Al₂O₃ | YAG/Al₂/TiO₅/Al₂O₃ |
| Al₂O₃/ZrO₂/Al₂O₃ | YAG/ZrO₂/Al₂O₃ |
| Al₂O₃/HfO₂/Al₂O₃ | YAG/HfO₂/Al₂O₃ |
| Al₂O₃/YAG/Al₂O₃ | Al₂O₃/SnO₂/Al₂O₃ |
| YAG/SnO₂/Al₂O₃ | Al₂O₃/mullite/Al₂O₃ |
| mullite/ZrO₂/mullite | |

4. Un matériau composite selon la revendication 1-3, **caractérisé** en ce que, de manière à éviter la liaison chimique de la matière d'interface aux fibres de renforcement et/ou à la matière de matrice lors du revêtement des fibres, une matière d'interface sous la forme d'une poudre ou d'un sol a été utilisée.

5. Un matériau composite selon l'une quelconque des revendications 1 à 4, **caractérisé** en ce que la matière d'interface présente une épaisseur d'au moins 2 µm.
